# EUROPEAN PATENT SPECIFICATION

(11) **EP 2 624 343 B1**
(45) Date of publication and mention of the grant of the patent: **11.04.2018**
(21) Application number: 11829561.7
(22) Date of filing: 28.09.2011
(51) Int. Cl.: C01D 1/02, C01G 45/02, C01G 49/02, C01G 53/04, H01M 4/485, H01M 4/525, H01M 4/505, H01M 10/052, C01G 45/12

(54) **POSITIVE ELECTRODE ACTIVE MATERIAL FOR A LITHIUM SECONDARY BATTERY, METHOD FOR PREPARING SAME, AND LITHIUM SECONDARY BATTERY COMPRISING SAME**
AKTIVMATERIAL FÜR DIE POSITIVELEKTRODE EINER LITHIUMSEKUNDÄRBATTERIE, HERSTELLUNGSVERFAHREN DAFÜR UND LITHIUMSEKUNDÄRBATTERIE DAMIT
MATÉRIAU ACTIF D'ÉLECTRODE POSITIVE POUR BATTERIE SECONDAIRE AU LITHIUM, PROCÉDÉ DE PRÉPARATION DE CE MATÉRIAU, ET BATTERIE SECONDAIRE AU LITHIUM COMPRENANT LEDIT MATÉRIAU

(30) Priority: 27.09.2011 KR 20110097354; 30.09.2010 KR 20100095294
(43) Date of publication of application: 07.08.2013
(73) Proprietor: SK Innovation Co., Ltd., Seoul 110-110 (KR)
(72) Inventor: OH, Sung Woo, Daejeon 701-759 (KR); SUN, Hee Young, Yongin-si Gyeonggi-do 446-591 (KR); DO, Yu Rim, Seoul 121-764 (KR); LEE, Hyung Bok, Seoul 138-751 (KR)
(74) Representative: Stolmár & Partner Patentanwälte PartG mbB
(86) International application number: PCT/KR2011/007134
(87) International publication number: WO 2012/044055

(56) References cited:
- EP-A2- 2 051 319
- WO-A1-2010/098187
- KR-A- 20030 034 018
- US-A1- 2007 087 268
- US-A1- 2008 063 591
- US-B1- 6 352 794
- SURESH P. ET AL.: 'Synthesis and Characterization of Novel, High-Capacity, Layered LiMn0.9Ni0.O5Fe0.05O2 as a Cathode Material for Li-Ion Cells' ELECTROCHEMICAL AND SOLID-STATE LETTERS vol. 8, no. 6, 2005, pages A263 - A266, XP055085388
- ITO A ET AL: "Cyclic deterioration and its improvement for Li-rich layered cathode material Li[Ni0.17Li0.2Co0.07Mn0.56]O2", JOURNAL OF POWER SOURCES, ELSEVIER SA, CH, vol. 195, no. 2, 15 January 2010 (2010-01-15), pages 567-573, XP026640140, ISSN: 0378-7753, DOI: 10.1016/J.JPOWSOUR.2009.07.052 [retrieved on 2009-08-08]
- ITO A ET AL: "A new approach to improve the high-voltage cyclic performance of Li-rich layered cathode material by electrochemical pre-treatment", JOURNAL OF POWER SOURCES, ELSEVIER SA, CH, vol. 183, no. 1, 15 August 2008 (2008-08-15), pages 344-346, XP022832976, ISSN: 0378-7753, DOI: 10.1016/J.JPOWSOUR.2008.04.086 [retrieved on 2008-05-13]

## Description

### [Technical Field]

The present invention relates to a method for preparing a positive electrode active material.

### [Background Art]

As a positive electrode active material for a lithium secondary battery, LiCoO₂, LiMn₂O₄, LiNiₓCo_{y}Mn_{z}O₂, and the like, have been mainly used. However, in accordance with the development of a middle and large-seized battery (hybrid electric vehicle (HEV), plug-in hybrid electric vehicle (PHEV), electric vehicle (EV)), a problem such as safety of the battery has been in the spotlight. In the case of the positive electrode active materials currently commercialized, since the positive electrode active material is expensive or there is a problem in terms of safety, or the like, research into a new positive electrode active material has been conducted.
P. Suresh et al. ("Synthesis and Characterization of Novel, High-Capacity, Layered LiMn Ni Fe 0 as 0.9 0.05 0.05 2 a Cathode Material for Li-Ion Cells", Electrochemical and solid-state letters, vol. 8, no. 6, 1 January 2005, pages A263-A266 discloses (Experimental) a method for preparing a positive electrode active material such as a lithium mixed metal oxide represented by the following formula LiNi_{0.05}Fe_{0.05}Mn_{0.9}O₂ by mixing the stoichiometric amounts of Na₂CO₂ (Sarbhai Chemicals), Mn (CH₃COO)₂.4H₂O (Loba Chemie), Ni(CH₂COO)₂.4H₂O (Merck), and Fe(COO)₂.2H₂O (synthesized using oxalic acid and FeSO₄) in about 25 mL of doubly distilled water to obtain 2 g of the sodium precursor corresponding to the composition NaMn_{0.9}Ni_{0.05}Fe_{0.05}O₂. The solution was heated for a slow evaporation of water. The solid residue obtained was ground well and heated at 250 °C for 12 h and then at 600 °C for 1 h followed by air quenching.The Na-compound thus obtained was ground well, and Na+/Li+ ion exchange was carried out by refluxing at 140-160 °C in 30 mL of n-hexanol containing of 8 M LiBr for 8 h, to obtain LiMn_{0.9}Ni_{0.05}Fe_{0.05}O₂. The product obtained was cooled, filtered, washed copiously with a mixture of ethanol and methanol, and dried at 80 °C for about 12 h.

However, recently, as a battery for an electric vehicle (EV) has been required, the development of a high-capacity positive electrode active material has been urgently demanded.

### (Disclosure)

### [Technical Problem]

An object of the present invention is to provide a method for preparing a high-capacity positive electrode active material.

The technical objects of the present invention are not limited to the above-mentioned technical objects, and other technical objects that are not mentioned will be clearly understood by those skilled in the art through the following descriptions.

### [Technical Solution]

In one general aspect, there are provided a method for preparing a high-capacity positive electrode active material for a lithium secondary battery including a composite oxide represented by the following Chemical Formula 1.

[Chemical Formula 1] LiₓNi_{y}Fe_{z}Mn_{w}O₂

(Where, x, y, and z satisfy the following Equations, respectively : 1≤x≤1.8, 0<y≤0.13, 0<z≤0.13, and 0.6≤w≤1.) or

[Chemical Formula 3] Li_{1.2} Ni_{0.104}Fe_{0.104}Mn_{0.592}O₂.

In a preferred embodiment, there are provided a method for preparing a high-capacity positive electrode active material for a lithium secondary battery containing a composite oxide represented by the following Chemical Formula 2.

[Chemical Formula 2] Li_{1.2}Ni_{0.13}Fe_{0.13}Mn_{0.7}O₂

The method for preparing the high-capacity positive electrode active material according to the present invention includes:
adding a nickel source material, an iron source material, and a manganese source material to a solvent, and adding a carbon source material at a content of 0.1 to 0.5 mol% based on the total content of the metal to prepare a metal mixed solution;
controlling a pH of the metal mixed solution between 5 to 12 to react the metal mixed solution;
drying the hydrate prepared by the reaction in a vacuum oven; and
mixing a lithium source material with the hydrate and then heat-treating the mixture at 500 to 800°C for 3 to 10 hours under inert atmosphere,
wherein the carbon source material is at least one kind selected from a group consisting of sucrose, polyvinylalcohol, polyethyleneglycol, oxalic acid, resorcinol, citric acid, and cellulose acetate.

### [Advantageous Effects]

According to the present invention, a positive electrode active material may be simply synthesized, and a high-capacity positive electrode active material may be prepared.

### [Best Mode]

Hereinafter, embodiments of the present invention will be described in detail. However, the embodiments are described for illustrative purpose, but the present invention is not limited thereto. Therefore, the present invention will be defined by the scope of the appended claims to be described below.

A positive electrode active material according to an embodiment of the present invention contains a composite oxide represented by the following Chemical Formula 1, has an average particle size of 5 to 15□, and includes secondary particles. In this case, the particle may include a spherical particle, an oval particle, and a plate type particle, but is not limited thereto.

[Chemical Formula 1] LiₓNi_{y}Fe_{z}Mn_{w}O₂

(Where, x, y, and z satisfy the following Equations, respectively: 1≤x≤1.8, 0<y≤0.13, 0<z≤0.13, and 0.6≤w≤1.)

More specifically, the positive electrode active material according to the present invention contains a composite oxide represented by the following Chemical Formula 2 or 3, has the average particle size of 5 to 15□, and includes secondary particles. In this case, the particle may include a spherical particle, an oval particle, and a plate type particle, but is not limited thereto.

[Chemical Formula 2] Li_{1.2}Ni_{0.13}Fe_{0.13}Mn_{0.74}O₂

[Chemical Formula 3] Li₁.₂Ni_{0.104}Fe_{0.104}Mn_{0.592}O₂

The average particle size of the particle in the positive electrode active material may be 5 to 15□. When the average particle size is less than 5□, tap density of the active material may be decreased, and when the average particle size is more than 15□, particle distribution of the active material is not uniform, such that the tap density may be decreased. In addition, when the size of the particle is excessively large, a diffusion length of Li positive ions becomes long, such that electrochemical properties may be deteriorated.

The composite oxide may have pores having a size of 50 to 150nm in the particle, and in order to form the pores, a carbon source material may be used. In the case in which the pore size is less than 50nm, an amount of an electrolyte solution capable of being impregnated into the particle is insignificant, such that there is no influence on the electrochemical properties, and in the case in which the pore size is more than 150nm, internal pores are excessively large such that an impregnation property of the electrolyte solution may be good, but strength of the particle may be decreased. Therefore, the spherical particle may be broken at the time of manufacturing an electrode.

As the carbon source material, at least one kind selected from a group consisting of sucrose, polyvinylalcohol, polyethyleneglycol, oxalic acid, resorcinol, citric acid, and cellulose acetate are used.

Next, a method for preparing a positive electrode active material according to the present invention will be described in detail.

The method for preparing a high-capacity positive electrode active material for a lithium secondary battery includes:
adding a nickel source material, an iron source material, and a manganese source material to a solvent, and adding a carbon source material at a content of 0.1 to 0.5 mol% based on the total content of the metal to prepare a metal mixed solution; controlling a pH of the metal mixed solution between 5 to 12 to react the metal mixed solution; drying the hydrate prepared by the reaction in a vacuum oven; and mixing a lithium source material with the hydrate and then heat-treating the mixture at 500 to 800°C for 3 to 10 hours under inert atmosphere, wherein the carbon source material is at least one kind selected from a group consisting of sucrose, polyvinylalcohol, polyethyleneglycol, oxalic acid, resorcinol, citric acid, and cellulose acetate.

More specifically, first, the nickel source material, the iron source material, and the manganese source material are added to the solvent to thereby prepare a mixed dispersion solution. In this case, a mixing ratio of the lithium source material, the nickel source material, the iron source material, and the manganese source material are adjusted so that a molar ratio of Li: Ni : F: Mn is 1 to 1.8:0.01 to 0.13:0.01 to 0.13:0.6 to 1.

As the nickel source material, the iron source material, and manganese source material, a nickel salt, an iron salt, and a manganese salt that include one selected from a group consisting of acetate, nitrate, sulfate, carbonate, citrate, phtalate, perchlorate, acetylacetonate, acrylate, formate, oxalate, halide, oxyhalide, boride, oxide, sulfide, peroxide, alkoxide, hydroxide, ammonium, acetylacetone, hydrates thereof, and combination thereof may be preferably used, respectively.

At the time of preparing the mixed solution, the carbon source material is added in order to have a micropore or mesopore structure after sintering.

As the solvent, distilled water, alcohol, or the like, may be used.

In this case, for vertically uniform mixing at the time of preparing the metal mixed solution, a reactor installed with two reverse rotational rotary blades may be preferably used, an output of a rotation motor may be preferably 2.4kW or more, and a revolution thereof may be preferably 1000 to 2000rpm.

After preparing the metal mixed solution, the pH of the metal mixed solution is controlled to 5 to 12 to react the metal mixed solution. When the pH is less than 5, Ni and Mn are not precipitated, and when the pH is more than 12, Fe is dissolved but not precipitated, such that a final compound is not formed. At the time of the reaction, an average temperature may be maintained at 40 to 60□, and the hydrate prepared after the reaction is dried in the vacuum oven at 50 to 70□ for 10 to 30 hours so that iron (Fe) atoms are not oxidized.

The lithium source material is added to the composite hydrate of nickel, iron, and manganese obtained as described abode.

As the lithium source material, lithium fluoride, lithium carbonate, lithium hydroxide, lithium nitrate, lithium acetate or a mixture thereof may be used.

Then, the mixture is fired at 500 to 800□ and a rate of 1 to 2°C/min under inert atmosphere, such that uniform particles having an average particle size of 5 to 15□ may be prepared. The heat treatment under inert atmosphere (N₂, Ar, or H₂/Ar=95:5 to 90:10) is performed at 500 to 800□ for 3 to 10 hours. In the case in which a temperature at the time of the heat treatment is in the above-mentioned range, uniform particles having a size of 5 to 15□ may be prepared.

The prepared primary particles may have crystallinity and be represented by the following Chemical Formula 1, more specifically, represented by Chemical Formula 2 or 3.

[Chemical Formula 1] LiₓNi_{y}Fe_{z}MN_{w}O₂

(Where, x, y, and z satisfy the following Equations, respectively: 1≤x≤1.8, 0<y≤0.13, 0<z≤0.13, and 0.6≤w≤1.)

[Chemical Formula 2] Li_{1.2}Ni_{0.13}Fe_{0.23}Mn_{0.74}O₂

[Chemical Formula 3] Li_{1.2}Ni_{0.104}Fe_{0.104}Mn_{0.592}O₂

The method for preparing a positive electrode active material according to the embodiment of the present invention, which is a method for preparing a mixed dispersion solution, may be easily performed as compared with a hydrothermal synthesis method, a precipitation method, a sol-gel method, or the like. Further, according to the present invention, the composite oxide having a uniform size may be synthesized, and the nickel source material, the iron source material, the lithium source material and the manganese source material may be uniformly mixed, and a spherical precursor may be prepared.

The positive electrode active material according to the embodiment of the present invention may be usefully used in a positive electrode of a lithium secondary battery. The lithium secondary battery may include the positive electrode, a negative electrode containing a negative electrode active material, and a non-aqueous electrolyte.

The positive electrode may be prepared by mixing the positive electrode active material according to the embodiment of the present invention, a conductive material, a binding material, and the solvent to prepare a positive electrode active material composition, and then directly coating and drying the positive electrode active material composition onto an aluminum current collector. Alternatively, the positive electrode may be prepared by casting the positive electrode active material composition on a separate supporter, separating a film from the supporter, and laminating the obtained film on the aluminum current collector.

In this case, as the conductive material, carbon black, graphite, and metal powder may be used, and as the binding material, any one or a mixture of at least two selected from a vinylidene fluoride/hexafluoropropylene copolymer, polyvinylidene fluoride, polyacrylonitrile, polymethylmethacrylate, and polytetrafluoroethylene may be used. In addition, as the solvent, N-methylpyrrolidone, acetone, tetrahydrofuran, decane, and the like, may be used. In this case, the positive electrode active material, the conductive material, the binding material, and the solvent may be used at the content level at which they are generally used in the lithium secondary battery.

The negative electrode may be prepared by mixing the negative electrode active material, a binding material, and the solvent to prepare an negative electrode active material composition and then directly coating the negative electrode active material composition onto a copper current collector, or casting the negative electrode active material composition on a separate supporter and laminating the negative electrode active material film separated from the support on the copper current collector, similarly to the positive electrode. In this case, the negative electrode active material composition may further contain a conductive material, as needed.

As the negative electrode active material, a material capable of performing intercalation/deintercalation of lithium may be used. For example, a lithium metal, a lithium alloy, lithium titanate, silicon, a tin alloy, cokes, artificial graphite, natural graphite, an organic polymer compound, a combustible material, carbon fiber, or the like, may be used. Further, the conductive material, the binding material, and the solvent may be same as those in the case of the above-mentioned cathode.

Any separator may be used as long as the separator is generally used in the lithium secondary battery. For example, polyethylene, polypropylene, polyvinylidene fluoride, or multi-layer having at least two thereof may be used as the separator, and a mixed multilayered separator such as a polyethylene/polypropylene double-layered separator, a polyethylene/polypropylene/polyethylene triple-layered separator, polypropylene/polyethylene/polypropylene triple-layered separator, and the like, may also be used.

As the electrolyte filled in the lithium secondary battery, a non-aqueous electrolyte, a solid electrolyte known in the art, or the like, may be used, and an electrolyte in which lithium salts are dissolved may be used.

A solvent of the non-aqueous electrolyte is not particularly limited, but cyclic carbonates such as ethylene carbonate, propylene carbonate, butylene carbonate, vinylene carbonate, or the like; chain carbonates such as dimethyl carbonate, methylethyl carbonate, diethyl carbonate, or the like; esters such as methyl acetate, ethyl acetate, propyl acetate, methyl propionate, ethyl propionate, γ-butyrolactone, or the like; ethers such as 1,2-dimethoxyethane, 1,2-diethoxyethane, tetrahydrofuran, 1,2-dioxane, 2-methyltetrahydrofuran, or the like; nitriles such as acetonitrile, or the like; or amides such as dimethylformamide, or the like, may be used. One of these solvents may be used along, or a plurality of solvents may be combined to thereby be used. Particularly, a mixed solvent of the cyclic carbonate and the chain carbonate may be preferably used.

Further, as the electrolyte, a gel phase polymer electrolyte in which a polymer electrolyte such as polyethyleneoxide, polyacrylonitrile, or the like, is impregnated with an electrolyte solution, or an inorganic solid electrolyte such as LiI, Li₃N, or the like, may be used.

In this case, the lithium salt may be one kind selected from a group consisting of LiPF₆, LiBF₄, LiShF₆, LiAsF₆, LiClO₄, LiCF₃SO₃, Li(CF₃SO₂)₂N, LiC₄F₉SO₃, LiSbF₆, LiAlO₄, LiAlCl₄, LiCl, and LiI.

As described above, according to the present invention, the positive electrode active material, which is the composite oxide capable of being easily prepared, prepared on a large scale, and having a uniform size, may be obtained. In addition, the positive electrode active material having high capacity, high energy density, and excellent thermal stability may be obtained.

A simple modification or change of the present invention may be easily performed by those skilled in the art, but this modification or change should be considered to be within the scope of the invention.

Hereinafter, Examples will be provided in order to describe the present invention in more detail. However, the present invention is not limited to the following Examples.

The physical properties were measured by the following measuring methods.

### 1) Capacity (mAh/g)

A half cell of a 2032 coin type cell was manufactured using a lithium metal as a negative electrode, and the capacity was measured at charging and discharging voltages of 2.0V to 4.6V at 0.1 C.

### [Example 1]

Sucrose (0.5mol%) was added to a mixed solution (2M) of nickel sulfate, iron sulfate, and manganese sulfate to prepare a metal solution.

The prepared metal solution was put into a 4L reactor at a rate of 300ml/1hr, NH₄OH was added thereto as a chelating agent, and a pH was controlled by NaOH. At this time, a reaction temperature was 50°C. The total synthesis time was 24 hours. The finally synthesized precursor was washed with distilled water and then dried in a vacuum oven at 60 °C for 20 hours so that Fe was not oxidized.

LiOH was added to the dried Ni-Fe-Mn(OH)₂ precursor as a lithium source material so that the mixture has a molar ratio shown in the following Table 1, and then mixed with each other. After mixing, firing was performed at 800□ for 15 hours under inert atmosphere (N₂), thereby preparing a positive electrode active material having an average particles size of 10□.

Physical properties of the prepared positive electrode active material were shown in the following Table 1.

### [Examples 2 to 9]

A positive electrode active material having an average particles size of 10□ was prepared at the same conditions as those in Example 1 except that at the time of the synthesis, the pH and the molar ratio of the source materials were controlled as shown in Table 1.

Physical properties of the prepared positive electrode active material were shown in the following Table 1.

### [Comparative example 1]

A positive electrode active material having an average particles size of 10□ was prepared at the same conditions as those in Example 1 except that at the time of the synthesis, the pH was controlled to 4 as shown in Table 1.

Physical properties of the prepared positive electrode active material were shown in the following Table 1.

### [Comparative example 2]

A positive electrode active material having an average particles size of 10□ was prepared at the same conditions as those in Example 1 except that at the time of the synthesis, the pH was controlled to 13 as shown in Table 1.

Physical properties of the prepared positive electrode active material were shown in the following Table 1.

### [Comparative example 3]

A positive electrode active material having an average particles size of 10□ was prepared at the same conditions as those in Example 1 except that at the time of the synthesis, the molar ratio of the source materials was controlled as shown in Table 1.

Physical properties of the prepared positive electrode active material were shown in the following Table 1**.**

### [Comparative example 4]

A positive electrode active material having an average particles size of 10□ was prepared at the same conditions as those in Example 1 except that at the time of the synthesis, the molar ratio of the source materials was controlled as shown in Table 1.

Physical properties of the prepared positive electrode active material were shown in the following Table 1.

**[Table 1]**

| | Syntheti c pH | Chemical composition | Capacity (mAh/g) |
|---|---|---|---|
| Example 1 | 5 | Li_{1.2}Ni_{0.13}Fe_{0.13}Mn_{0.74}O₂ | 175 |
| Example 2 | 6 | Li_{1.2}Ni_{0.13}Fe_{0.13}Mn_{0.74}O₂ | 210 |
| Example 3 | 7 | Li_{1.2}Ni_{0.13}Fe_{0.13}Mn_{0.74}O₂ | 220 |
| Example 4 | 8 | Li_{1.2}Ni_{0.13}Fe_{0.13}Mn_{0.74}O₂ | 240 |
| Example 5 | 9 | Li_{1.2}Ni_{0.13}Fe_{0.13}Mn_{0.74}O₂ | 255 |
| Example 6 | 10 | Li_{1.2}Ni_{0.13}Fe_{0.13}Mn_{0.74}O₂ | 245 |
| Example 7 | 11 | Li_{1.2}Ni_{0.13}Fe_{0.13}Mn_{0.74}O₂ | 232 |
| Example 8 | 12 | Li_{1.2}Ni_{0.13}Fe_{0.13}Mn_{0.74}O₂ | 200 |
| Example 9 | 9 | Li_{1.2}Ni_{0.104}Fe_{0.104}Mn_{0.592}O₂ | 250 |
| Comparative Example 1 | 4 | Li_{1.2}Ni_{0.13}Fe_{0.13}Mn_{0.74}O₂ | 20 |
| Comparative Example 2 | 13 | Li_{1.2}Ni_{0.13}Fe_{0.13}Mn_{0.74}O₂ | 10 |
| Comparative Example 3 | 9 | Li_{1.09}Ni_{0.33}Fe_{0.33}Mn_{0.33}O₂ | 40 |
| Comparative Example 4 | 9 | Li_{1.9}Ni_{0.22}Fe_{0.22}Mn_{0.55}O₂ | 30 |

As shown in Table 1, it may be appreciated that the positive electrode active material having excellent capacity was prepared in the pH range of 5 to 12 at the time of preparing the positive electrode active material according to the present invention.

In addition, as shown in Comparative Examples 3 and 4, it may be appreciated that when the molar ratio of the positive electrode active material was out of the range of the present invention, the capacity was significantly decreased.

## Claims

1. A method for preparing a high-capacity positive electrode active material for a lithium secondary battery comprising a composite oxide of Chemical Formula 1
[Chemical Formula 1] LiₓNi_{y}Fe_{z}Mn_{w}O₂,
where, x, y, and z satisfy the following Equations, respectively: 1≤x≤1.8, 0<y≤0.13, 0<z≤0.13, and 0.6≤w≤1, or
[Chemical Formula 3] Li_{1.2}Ni_{0.104}Fe_{0.104}Mn_{0.592}O₂,
the method comprising:
adding a nickel source material, an iron source material, and a manganese source material to a solvent, and adding a carbon source material at a content of 0.1 to 0.5 mol% based on the total content of the metal to prepare a metal mixed solution;
controlling a pH of the metal mixed solution between 5 to 12 to react the metal mixed solution;
drying the hydrate prepared by the reaction in a vacuum oven; and
mixing a lithium source material with the hydrate and then heat-treating the mixture at 500 to 800°C for 3 to 10 hours under inert atmosphere,
wherein the carbon source material is at least one kind selected from a group consisting of sucrose, polyvinylalcohol, polyethyleneglycol, oxalic acid, resorcinol, citric acid, and cellulose acetate.

2. The method of claim 1, wherein the drying of the hydrate is performed at 50 to 70°C for 10 to 30 hours.

3. The method of claim 1, wherein in the preparing of the metal mixed solution, the solvent is distilled water, alcohol or a mixture thereof.

4. The method of claim 1, wherein a mixing ratio of the lithium source material, the nickel source material, the iron source material, and the manganese source material are adjusted so that a molar ratio of Li: Ni: Fe: Mn is 1-1.8:0.01-0.13:0.01-0.13:0.6-1.

5. The method of claim 1, wherein the composite oxide of Chemical Formula 1 is a composite oxide of the following Chemical Formula 2:
[Chemical Formula 2] Li_{1.2}Ni_{0.13}Fe_{0.13}Mn_{0.74}O₂

## Patentansprüche

1. Verfahren zur Herstellung eines aktiven Materials mit hoher Kapazität für eine positive Elektrode für eine Lithium-Sekundärbatterie, umfassend ein Mischoxid der chemischen Formel 1
[chemische Formel 1] LiₓNi_{y}Fe_{z}Mn_{w}O₂,
worin x, y und z die folgenden Gleichungen erfüllen: 1 ≤ x ≤ 1,8, 0 < y ≤ 0,13, 0 < z ≤ 0,13 und 0,6 ≤ w ≤ 1, oder der
[chemische Formel 3] Li_{1.2}Ni_{0.104}Fe_{0.104}Mn_{0.592}O₂,
wobei das Verfahren umfasst:
Zugeben eines Nickelausgangsmaterials, eines Eisenausgangsmaterials und eines Manganausgangsmaterials zu einem Lösungsmittel, und Zugeben eines Kohlenstoffausgangsmaterials zu einem Gehalt von 0,1 bis 0,5 Mol-%, bezogen auf den Gesamtgehalt des Metalls, um eine Metallmischlösung herzustellen;
Steuern eines pH-Werts der Metallmischlösung zwischen 5 und 12, um die Metallmischlösung umzusetzen;
Trocknen des durch die Umsetzung in einem Vakuumofen hergestellten Hydrats; und
Mischen eines Lithiumausgangsmaterials mit dem Hydrat und anschließendes Wärmebehandeln der Mischung bei 500 bis 800 °C für 3 bis 10 Stunden unter Inertatmosphäre,
wobei das Kohlenstoffausgangsmaterial mindestens eine Art ist, die aus einer Gruppe ausgewählt ist, die aus Saccharose, Polyvinylalkohol, Polyethylenglycol, Oxalsäure, Resorcin, Citronensäure und Celluloseacetat besteht.

2. Verfahren nach Anspruch 1, wobei das Trocknen des Hydrats bei 50 bis 70 °C für 10 bis 30 Stunden durchgeführt wird.

3. Verfahren nach Anspruch 1, wobei das Lösungsmittel bei der Herstellung der Metallmischlösung destilliertes Wasser, Alkohol oder eine Mischung davon ist.

4. Verfahren nach Anspruch 1, wobei ein Mischverhältnis des Lithiumausgangsmaterials, des Nickelausgangsmaterials, des Eisenausgangsmaterials und des Manganausgangsmaterials so eingestellt wird, dass ein Molverhältnis von Li: Ni: Fe: Mn gleich 1-1,8:0,01-0,13:0,01-0,13:0,6-1 ist.

5. Verfahren nach Anspruch 1, wobei das Mischoxid der chemischen Formel 1 ein Mischoxid der folgenden chemischen Formel 2 ist:
[Chemische Formel 2] Li_{1.2}Ni_{0.13}Fe_{0.13}Mn_{0.74}O₂

## Revendications

1. Procédé de préparation d'un matériau actif d'électrode positive de grande capacité pour une batterie secondaire au lithium comprenant un oxyde composite de formule chimique 1
[Formule chimique 1] LiₓNi_{y}Fe_{z}Mn_{w}O₂,
dans lequel x, y et z suffissent respectivement les équations suivantes: 1≤x≤1.8, 0 <y≤0.13, 0 <z≤0.13, et 0.6≤w≤1, ou
[Formule chimique 3] Li_{1.2}Ni_{0.104}Fe_{0.104}Mn_{0.592}O₂,
le procédé comprenant:
ajouter un matériau source de nickel, un matériau source de fer et un matériau source de manganèse à un solvant, et ajouter un matériau source de carbone à une teneur de 0,1 à 0,5% en moles par rapport à la teneur totale du métal pour préparer une solution de métal mélangé;
contrôler un pH de la solution de métal mélangé entre 5 et 12 pour faire réagir la solution de métal mélangé;
sécher l'hydrate préparé par la réaction dans un four sous vide; et
mélanger un matériau source de lithium avec l'hydrate et ensuite traiter thermiquement le mélange entre 500 et 800°C pendant 3 à 10 heures sous atmosphère inerte,
dans lequel la matière de source de carbone est au moins une sorte choisie parmi un groupe constitué de saccharose, d'alcool polyvinylique, de polyéthylèneglycol, d'acide oxalique, de résorcinol, d'acide citrique et d'acétate de cellulose.

2. Procédé selon la revendication 1, dans lequel le séchage de l'hydrate est effectué entre 50 et 70 °C pendant 10 à 30 heures.

3. Procédé selon la revendication 1, dans lequel, dans la préparation de la solution de métal mélangé, le solvant est de l'eau distillée, de l'alcool ou un mélange de ceux-ci.

4. Procédé selon la revendication 1, dans lequel un rapport de mélange du matériau source de lithium, du matériau de source de nickel, du matériau de source de fer et du matériau de source de manganèse est ajusté de sorte qu'un rapport molaire Li: Ni: Fe: Mn est 1-1,8 0,01-0,13: 0,01-0,13: 0,6-1.

5. Procédé selon la revendication 1, dans lequel l'oxyde composite de la formule chimique 1 est un oxyde composite de la formule chimique 2 suivante:
[Formule chimique 2] Li_{1.2}Ni_{0.13}Fe_{0.13}Mn_{0.74}O₂
